# EUROPÄISCHE PATENTSCHRIFT

(11) **EP 1 927 766 B1**
(45) Veröffentlichungstag und Bekanntmachung des Hinweises auf die Patenterteilung: **13.06.2012**
(21) Anmeldenummer: 07023022.2
(22) Anmeldetag: 28.11.2007
(51) Int. Cl.: F16B 13/14

(54) **Siebhülse**
Perforated casing
Douille perforée

(30) Priorität: 30.11.2006 DE 102006058182
(43) Veröffentlichungstag der Anmeldung: 04.06.2008
(73) Patentinhaber: Adolf Würth GmbH & Co. KG, 74653 Künzelsau (DE); Würth International AG, 7004 Chur (CH)
(72) Erfinder: Wieland, Achim, 74211 Leingarten (DE); Küenzlen, Jürgen, Dr., 71570 Oppenweiler (DE)
(74) Vertreter: Patentanwälte Ruff, Wilhelm, Beier, Dauster & Partner

(56) Entgegenhaltungen:
- DE-A1- 3 535 251
- DE-A1- 4 004 207
- US-A1- 2004 250 497

## Beschreibung

Die Erfindung betrifft eine Siebhülse für ein Verankerungselement, das sich mithilfe von aushärtendem Material, beispielsweise Mörtel, in einem Loch verankern lässt.

Verbunddübel werden dadurch in einem Bohrloch verankert, dass ein aushärtender Kleber eine formschlüssige Verbindung zwischen dem Bohrloch und einem Verankerungselement bewirkt, beispielsweise einer Gewindestange. Zur Verbesserung der Verteilung der aushärtenden Klebermasse werden Siebhülsen verwendet, die in das Bohrloch eingesteckt werden und in die die Dübelmasse eingebracht wird. Anschließend wird das Verankerungselement eingeschoben, das dann zu einer Verteilung der Mörtelmasse führt.

Eine bekannte Siebhülse (EP 172134) besteht aus einem Drahtgewebe. Diese Dübelhülse weist einen ebenfalls aus Drahtgewebe bestehenden Boden auf. Die Siebhülse weist an ihrem äußeren Ende einen nach außen gerichteten Flansch auf. Die Verwendung eines Drahtgewebes hat den Vorteil, dass eine große Zahl von Durchtrittsöffnungen für die Mörtelmasse vorhanden ist, wobei die Fläche der Öffnungen im Verhältnis zur gesamten Oberfläche der Hülse groß ist.

Bei einem weiteren bekannten Dübel mit siebartiger Hülse (EP 338982) besteht die Hülse aus Streckmetall, ist aber im übrigen in ähnlicher Weise aufgebaut wie die zunächst genannte Siebhülse.

Ebenfalls bekannt ist ein hülsenförmiger Dübelkörper aus einem Drahtgewebe mit einem Kopfstück und einem Verschlussstück, die beide aus Kunststoff bestehen und in das jeweilige Ende des Dübelkörpers eingesteckt sind. Sie liegen dort kraftschlüssig fest (DE 3535251 A1).

Siebhülsen aus Kunststoff sind ebenfalls bekannt.

Alle bekannten Siebhülsen sind für eine definierte Tiefe des Bohrlochs und damit für eine bestimmte Größe des Verankerungselements bestimmt.

Der Erfindung liegt die Aufgabe zu Grunde, eine Möglichkeit zu schaffen, Verankerungen mithilfe von Verbunddübeln an Ort und Stelle an die unterschiedlichen Gegebenheiten anpassen zu können.

Zur Lösung dieser Aufgabe schlägt die Erfindung eine Siebhülse mit den im Anspruch 1 genannten Merkmalen vor. Die Erfindung schlägt ebenfalls ein Verfahren zur Herstellung einer Siebhülse und ein Verfahren zur Verankerung eines Verankerungselements mit einer Siebhülse vor. Weiterbildungen der Erfindung sind Gegenstand von Unteransprüchen.

Während im Stand der Technik die Siebhülsen eine feste Länge haben, die auf eine bestimmte Länge des zu verankernden Teils des Verankerungselements und damit auf eine Tiefe des Bohrlochs abgestimmt ist, hat die Siebhülse nach der Erfindung einen mindestens angenähert zylindrischen Teil, der am vorderen und hinteren Ende offen ist. Er lässt sich aus einem längeren Stück Hülsenschlauch oder Hülsenrohr durch Abtrennen herstellen. Zur Bildung der Siebhülse wird dieses schlauchartige oder rohrartige Teil dann mit dem Bodenelement und dem vorderen Abschlusselement versehen. Es ist dadurch möglich, an Ort und Stelle eine Siebhülse zu konfektionieren, die auf die Länge des einzusetzenden Teils des Verankerungselements abgestimmt ist. Dies führt zu einer Verringerung des Montageaufwands und zu einer Verringerung des verwendeten aushärtenden Materials.

Es ist natürlich auch denkbar, dem Monteur eine bestimmte Auswahl unterschiedlich langer Hülsenelemente mitzugeben, die er dann an Ort und Stelle mit dem Bodenelement und dem vorderen Abschlusselement versieht, um auf diese Weise seine Siebhülse zu konfektionieren.

Denkbar ebenfalls ist es, aus zwei kürzeren Rohrstücken durch Zusammenstecken eine längere Siebhülse zu bilden.

Besonders sinnvoll ist es natürlich, eine größere Länge des Rohrs oder Schlauchs vorzusehen, wobei der Schlauch und/oder das Rohr so ausgebildet sind, dass sie sich leicht ohne Spezialwerkzeuge quer zu ihrer Längsrichtung abtrennen lassen. Dies kann durch Schwachstellen oder ähnliches verwirklicht werden.

Insbesondere ist in Weiterbildung vorgesehen, dass das Bodenelement und/oder das vordere Abschlusselement mit dem jeweiligen Ende der Hülse rastend verbindbar sein können.

Dabei kann insbesondere vorgesehen sein, dass die Verbindung des Bodenelements und/oder des vorderen Abschlusselements von der Innenseite der Hülse geschieht, um auf diese Weise auch sicherzustellen, dass beim Einpressen des aushärtenden Materials sich der Boden und/oder das Abschlusselement nicht von der Hülse lösen.

Erfindungsgemäß ist vorgesehen, dass die Verbindung zwischen dem Bodenelement und der Hülse und auch die Verbindung zwischen dem vorderen Abschlusselement und der Hülse mit Abstand von dem jeweiligen Ende der Hülse erfolgt. Damit soll sichergestellt werden, dass auch bei einem unachtsamen Abtrennen aus dem längeren Schlauch oder der längeren Hülse, wenn nämlich die Stirnfläche schräg verläuft, dennoch eine Befestigung von Bodenelement und Abschlusselement möglich ist.

Da die Hülse Durchtrittsöffnungen aufweist, durch die das aushärtende Material von innen nach außen durchtreten soll, kann in Weiterbildung der Erfindung vorgesehen sein, die Verbindung zwischen Bodenelement und Abschlusselement einerseits und der Hülse andererseits dadurch zu bewerkstelligen, dass diese Elemente in eine derartige Durchtrittsöffnung oder mehrere derartige Durchtrittsöffnungen eingreifen. Hierzu kann insbesondere vorgesehen sein, dass an dem Bodenelement und/oder dem vorderen Abschlusselement Federzungen angeformt sind, die in Durchtrittsöffnungen eingreifen können.

Da die Festlegung zwischen dem Verankerungselement und dem Bohrloch formschlüssig und kraftschlüssig durch das aushärtende Material zwischen der Außenseite des Verankerungselements und der Wand des Bohrlochs geschieht, kann in Weiterbildung vorgesehen sein, dass das Bodenelement einen geschlossenen Boden der Hülse bildet. Ein Austreten des aushärtenden Materials durch den Boden trägt zur Verbesserung der Haltekraft nicht bei.

Um das bündige Einschieben der Siebhülse in ein Bohrloch zu gewährleisten, kann insbesondere vorgesehen sein, dass das vordere Abschlusselement einen über die Außenkontur der Hülse vorspringenden Außenflansch aufweist oder bildet, wobei dieser Außenflansch gegebenenfalls auch nur an einigen Stellen vorhanden sein muss.

Das Abschlusselement weist eine Öffnung auf, durch die das Verankerungselement eingesetzt wird. Diese Öffnung kann so ausgebildet sein, dass sie eine Zentrierung des Verankerungselements in der Siebhülse bewerkstelligt. Es kann insbesondere auch vorgesehen sein, dass hierzu Lamellen vorgesehen sind, die den Bereich zwischen dem Verankerungselement und der Innenseite der Siebhülse abdecken, um dadurch eine Art Rückstauklappe für das in die Siebhülse eingebrachte aushärtende Material zu bilden.

Insbesondere kann vorgesehen sein, dass die Durchtrittsöffnungen in Reihen angeordnet sind, die quer und parallel zur Längsachse der Hülse verlaufen. Diese Durchtrittsöffnungen können durch in Längsrichtung verlaufende Stege und die Stege verbindende Ringelemente gebildet sein.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung einer bevorzugten Ausführungsform der Erfindung sowie anhand der Zeichnung. Hierbei zeigen:
- Figur 1: die Seitenansicht eines Abschlusselements zur Bildung einer Siebhülse nach der Erfindung;
- Figur 2: die Seitenansicht eines verkürzten Hülsenelements zur Bildung der Siebhülse nach der Erfindung;
- Figur 3: die Seitenansicht eines Bodenelements für die Siebhülse nach der Erfindung;
- Figur 4: die Draufsicht auf ein vorderes Abschlusselement;
- Figur 5: einen Axialschnitt durch ein Hülsenelement.

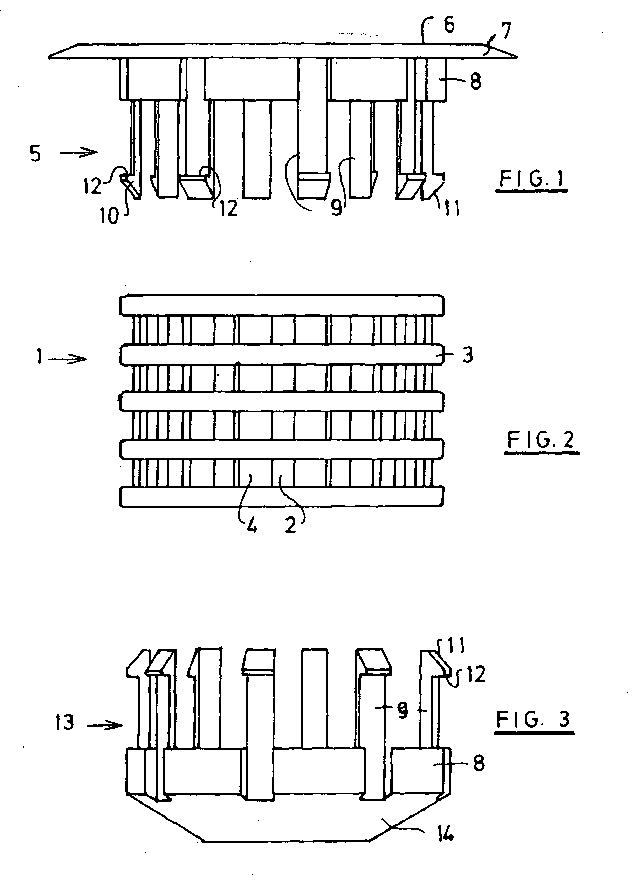

Zur Bildung einer Siebhülse nach der Erfindung dient ein aus einem Stück Schlauch oder Rohr abgetrenntes an beiden Enden offenes Hülsenelement 1, für das ein Beispiel in Figur 2 in verkürzter Form dargestellt ist. Üblicherweise sind die Hülsenelemente natürlich viel länger, aus Gründen der vereinfachten Darstellung wird hier nur ein Ausschnitt aus einem solchen Hülsenelement gezeigt. Das Hülsenelement enthält eine Vielzahl von in Längsrichtung verlaufenden Stäben 2, die an der Außenseite durch eine Vielzahl von Ringen 3 miteinander verbunden sind. Dadurch werden zwischen den Stäben 2 und den Ringen 3 Durchtrittsöffnungen 4 gebildet. Im dargestellten Beispiel sind die Durchtrittsöffnungen 4 rechteckig, es sind natürlich auch andere Formen möglich. Gleichzeitig bilden die Ringe 3 an der Außenseite der Hülse 1 mit Abstand versehene Vorsprünge, die zur Verbesserung des Haltevorgangs im Bohrloch beitragen können. Die in Figur 2 verkürzt dargestellte Hülse 1 ist an ihren beiden Enden offen.

Zum Einsetzen in das äußere Ende der Hülse 1, in Figur 2 beispielsweise oben, ist das in Figur 1 dargestellte Abschlusselement 5 bestimmt. Dieses Abschlusselement 5 weist eine ebene Vorderseite 6 und einen nach außen gerichteten Flansch 7 auf. Auf der der Vorderseite 6 abgewandten Seite des Flanschs 7 ist ein umlaufendes Ringelement 8 ausgebildet, das dem Abschlusselement 5 eine gewisse Stabilität verleiht. An dem Ringelement 8 sind acht federnde Zungen 9 angeformt, die sich in Axialrichtung erstrecken und an ihrer Außenseite im Endbereich einen Haken 10 aufweisen. Der Haken weist eine in die Hülse 1 gerichtete vordere Schrägfläche 11 und eine quer zur Achse verlaufende Rastfläche 12 auf. An den Stellen, wo die Federzungen 9 an dem Ringelement 8 angeformt sind, weist die Außenseite des Ringelements 8 eine Kerbe auf, die in der Vorderseite 6 des Abschlusselements 5 in eine Öffnung übergeht. Diese Öffnungen dienen zum Durchführen von Vorsprüngen in der Spritzform, in der das Abschlusselement 5 aus Kunststoff hergestellt wird.

Der Abstand der Rastfläche 12 von der Unterseite des Flanschs 7 ist so gewählt, dass die Rastfläche dann, wenn das Abschlusselement in die Hülse 1 eingeschoben wird, nicht mit der ersten Reihe von Durchtrittsöffnungen 4 zusammenwirkt, sondern mit der zweiten Reihe. Damit soll erreicht werden, dass bei einem schrägen Abschneiden des Hülsenschlauchs dennoch eine korrekte Befestigung des Abschlusselements 5 möglich ist, und zwar auch eine Befestigung in der Weise, dass die Flanschunterseite senkrecht zur Längsachse des Schlauchs verläuft.

Während das Abschlusselement 5 der Figur 1 für das äußere Ende der Hülse 1 bestimmt ist, ist für das gegenüberliegende Ende der Hülse 1 ein Bodenelement 13 bestimmt, das in Figur 3 dargestellt ist. Dies enthält in gleicher Weise wie das Abschlusselement 5 acht Federzungen 9 mit jeweils einer Rastfläche 12, die senkrecht zur Längsachse verläuft, und einer Schrägfläche 11. Das Ringelement 8 ist an einem geschlossenen Boden 14 ausgebildet. Wenn das Bodenelement in die Hülse 1 eingeschoben wird, federn die Federzungen zurück, bis die Haken 10 in die entsprechenden Durchtrittsöffnungen 4 der zweiten Reihe vom Ende eingreifen. Das Bodenelement 13 bildet in zusammengesetztem Zustand einen geschlossenen Boden, so dass das in die Siebhülse eingebrachte aushärtende Material nur durch die Mantelfläche nach außen durchtreten kann.

Wie man der vereinfachten Darstellung der Figur 2 entnehmen kann, lässt sich eine solche Hülse 1 aus einem längeren schlauchartigen oder rohrartigen Gebilde herstellen, da man den Bereich zwischen zwei Ringen 3 ohne weiteres mit einem Messer oder einer Zange durchtrennen kann.

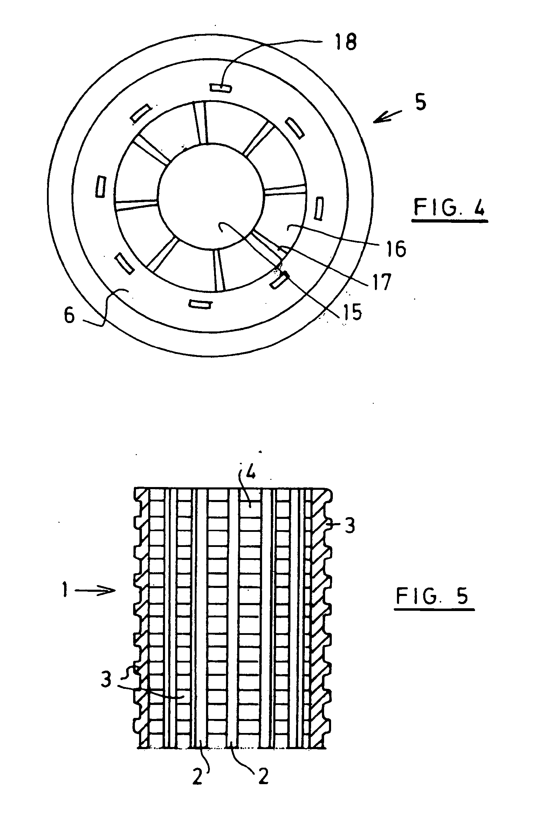

Figur 4 zeigt eine Draufsicht auf das Abschlusselement 5 der Figur 1, also von oben in Figur 1. Hier ist zu sehen, dass das Abschlusselement eine zentrale kreisförmige Öffnung 15 für den Schaft eines Verankerungselements aufweist. Diese Öffnung 15 wird von Lamellen 16 begrenzt, die zwischen sich beispielsweise Schlitze 17 bilden können, die sich aber auch berühren können. Durch die mittig angeordnete Öffnung 15 wird das Verankerungselement in der Siebhülse zentriert, um sicherzustellen, dass es allseits von aushärtendem beziehungsweise später ausgehärtetem Material umgeben ist.

Die in Verlängerung der Rastflächen 12 angeordneten Öffnungen 18, auf die schon hingewiesen wurde, sind hier ebenfalls zu sehen.

Während die Figur 2 eine Außenansicht eines Stücks Hülse 1 zeigt, zeigt der Schnitt der Figur 5 eine Innenansicht einer Hülse 1. Auch hier ist zu sehen, dass die inneren Stäbe 2 und die äußeren Ringe 3 zwischen sich rechteckige Durchtrittsöffnungen 4 bilden. Durch diese Durchtrittsöffnungen 4 tritt das aushärtende Material von innen nach außen hindurch. Sie dienen ebenfalls, wie bereits erwähnt, dazu, die Haken 10 der Federzungen 9 aufzunehmen.

Das Verfahren zur Herstellung einer Siebhülse sieht so aus, dass aus einem beliebig langen Rohr oder Schlauch, je nach Flexibilität des verwendeten Materials, ein der gewünschten Länge der Siebhülse entsprechender Teil abgetrennt wird. Dieser an beiden Enden offene Teil wird dann an einem Ende mit einem Bodenelement 13 versehen, und am anderen Ende mit einem Abschlusselement 5. Auf diese Weise erhält man eine Siebhülse, die auf die jeweilige Länge eines zu verankernden Verankerungselements abgestimmt ist.

Bei den dargestellten Ausführungsbeispiel ist die Hülse beziehungsweise der Schlauch an beiden Seiten offen, so dass zur Herstellung der Siebhülse an beiden Stellen das entsprechende Element angebracht werden muss, also das Bodenelement 13 oder das Abschlusselement (5).

Bei einem Hülsenmaterial, dass eher starr ausgebildet ist und daher nicht als Schlauch bezeichnet werden kann, kann es von Vorteil sein, eine Hülse mit einer beispielsweise der doppelten maximalen Länge von Verankerungselementen entsprechenden Länge vorzusehen, und diese Hülse an einem oder auch an beiden Enden schon mit einem Bodenelement 13 oder einem Abschlusselement 5 zu versehen. Auch in diesem Fall kann ein Ablängen an der Verwendungsstelle erfolgen, wobei man dann von dem einen bereits fertiggestellten Ende der Siebhülse ausgehend die entsprechende Abmessung wählt. Dann ist nach dem Ablängen das auf diese Weise hergestellte Siebhülsenelement an einem Ende schon fertig, so dass nur noch das jeweils zu ergänzende andere Element angebracht werden muss.

Diese Art der Ausbildung ist auch dann möglich, wenn das Hülsenmaterial flexibel ist.

## Patentansprüche

1. Siebhülse für ein Verankerungselement, mit
1.1 einer im wesentlichen zylindrischen Hülse (1), die
1.2 an beiden Enden offen ist und
1.3 eine Vielzahl von in Reihen angeordneten Durchtrittsöffnungen (4) in ihrer Mantelfläche aufweist,
1.4 einem Bodenelement (13), das
1.5 als getrenntes Bauteil mit der Hülse (1) im Bereich von deren einem Ende verbindbar bzw. verbunden ist, sowie mit
1.6 einem vorderen eine mittlere Öffnung (15) aufweisenden Abschlusselement (5), das
1.7 mit der Hülse (1) an deren dem Bodenelement (13) entgegengesetzten Ende verbindbar bzw. verbunden ist, wobei
1.8 die Befestigung beziehungsweise Verbindung zwischen dem Bodenelement (13) und/oder dem vorderen Abschlusselement (5) einerseits und der Hülse (1) andererseits durch Eingreifen in mindestens eine Durchtrittsöffnung (4) mit einem auch bei einem schrägen Verlauf der Stirnfläche der Hülse das Eingreifen ermöglichenden Abstand von dem jeweiligen Ende der Hülse (1) erfolgt.

2. Siebhülse nach Anspruch 1, bei der die Hülse (1) durch Ablängen eines quer zu seiner Längsrichtung abtrennbar ausgebildeten Hülsenschlauchs und/oder eines Hülsenrohrs herstellbar ist.

3. Siebhülse nach Anspruch 1 oder 2, bei der das Bodenelement (13) und/oder das vordere Abschlusselement (5) mit dem jeweiligen Ende der Hülse (1) rastend verbindbar sind.

4. Siebhülse nach einem der vorhergehenden Ansprüche, bei der das Bodenelement (13) und/oder das vordere Abschlusselement (5) von der Innenseite der Hülse (1) mit dieser verbindbar sind.

5. Siebhülse nach einem der vorhergehenden Ansprüche, bei der zur Verbindung zwischen dem Bodenelement (13) und/oder dem vorderen Abschlusselement (5) und der Hülse (1) Federzungen (9) vorgesehen sind, die an dem Bodenelement (13) und/oder dem Abschlusselement (5) angeformt sind.

6. Siebhülse nach einem der vorhergehenden Ansprüche, bei der das mit der Hülse (1) verbundene Bodenelement (13) einen geschlossenen Boden (14) der Hülse (1) bildet.

7. Siebhülse nach einem der vorhergehenden Ansprüche, bei der das vordere Abschlusselement (5) einen mindestens teilweise ausgebildeten über die Außenkontur der Hülse (1) vorspringenden Außenflansch (7) aufweist beziehungsweise bildet.

8. Siebhülse nach einem der vorhergehenden Ansprüche, bei der die Öffnung (15) des Abschlusselements (5) durch Lamellen (16) gebildet wird, die das Verankerungselement auf Abstand von der Innenseite der Hülse (1) halten.

9. Siebhülse nach Anspruch 8, bei der die die Innenöffnung (15) bildenden Lamellen (16) eine Rückstauklappe für das in die Siebhülse eingebrachte aushärtende Material bilden.

10. Siebhülse nach einem der vorhergehenden Ansprüche, bei der die Durchtrittsöffnungen (4) in Reihen angeordnet sind, die quer und parallel zur Längsachse der Hülse (1) verlaufen.

11. Siebhülse nach einem der vorhergehenden Ansprüche, bei der die Hülse (1) in Längsrichtung verlaufende Stege (2) und die Stege (2) verbindende Ringelemente (3) aufweist.

12. Siebhülse nach Anspruch 10 oder 11, bei der die Federzungen (9) in die Durchtrittsöffnungen (4) der zweiten Reihe gerechnet von dem jeweiligen Hülsenende eingreifen.

13. Siebhülse nach einem der vorhergehenden Ansprüche, bei der die Hülse aus Kunststoff besteht.

14. Verfahren zum Herstellen einer Siebhülse für ein Verankerungselement, bei dem
14.1 aus einem Hülsenrohr und/oder einem Hülsenschlauch mit einer Vielzahl von in Reihen angeordneten Durchtrittsönnungen (4) in der Mantelfläche ein der gewünschten Länge der Siebhülse entsprechendes Teil abgetrennt wird,
14.2 mit dem einen Ende der **dadurch** gebildeten Siebhülse ein Bodenelement (13) verbunden wird, und
14.3 mit dem anderen Ende des Hülsenelements ein eine Öffnung (15) aufweisendes Abschlusselement (5) verbunden wird, wobei
14.4 das Bodenelement und/oder das vordere Abschlusselement mit der Hülse durch Eingreifen in mindestens eine Durchtrittsöffnung mit einem auch bei einem schrägen Verlauf der Stirnfläche der Hülse das Eingreifen ermöglichenden Abstand von dem jeweiligen Ende der Hülse verbunden werden.

15. Verfahren nach Anspruch 14, bei dem das Abschlusselement (5) und/oder das Bodenelement (13) mit dem jeweiligen Ende der Siebhülse rastend verbunden werden.

16. Verfahren nach Anspruch 14 oder 15, bei dem das Abschlusselement und/oder das Bodenelement von der Innenseite des Siebhülse mit dieser verbunden werden.

17. Verfahren nach einer Ansprüche 14 bis 16, bei dem das Bodenelement und/oder das vordere Abschlusselement (5) mithilfe von Federzungen mit der Hülse verbunden werden.

18. Verfahren nach einem der Ansprüche 14 bis 17, bei dem die Hülse (1) mithilfe des Bodenelements (13) mit einem geschlossenen Boden versehen wird.

19. Verfahren nach einem der Ansprüche 14 bis 18, bei dem die Hülse (1) im Bereich ihres vorderen Endes mit einem über ihre Außenkontur vorspringenden Außenflansch versehen wird.

20. Verfahren zum Verankern eines Verankerungselements in einem Bohrloch, bei dem
20.1 ein der gewünschten Einsetztiefe des Verankerungselements in das Bohrloch entsprechender Teil von einem Hülsenrohr und/oder Hülsenschlauch mit einer Vielzahl von in Reihen angeordneten Durchtrittsöffnungen (4) in der Mantelfläche abgetrennt wird,
20.2 das eine Ende des abgetrennten Hülsenteils mit einem dieses Ende abdeckenden Bodenelement (13) durch Eingreifen in mindestens eine Durchtrittsöffnung (4) versehen wird,
20.3 das gegenüberliegenden Ende mit einem Abschlusselement (5) durch Eingreifen in mindestens eine Durchtrittsöffnung verbunden wird, wobei
20.4 der Abstand zwischen dem Hülsenteil einerseits und dem Bodenelement (13) und/oder dem Abschlusselement (5) andererseits so gewählt wird, dass auch bei einem schrägen Verlauf der jeweiligen Stirnfläche des Hülsenteils das Eingreifen möglich ist,
20.5 die derart gebildete Siebhülse in das Bohrloch eingeschoben,
20.6 das Innere der Siebhülse mit aushärtendem Material ausgefüllt und
20.7 das Verankerungselement in die Siebhülse eingeschoben wird.

21. Verfahren nach Anspruch 20, bei dem zur Bildung der Siebhülse das Bodenelement und/oder das vordere Abschlusselement mit dem jeweiligen Ende des abgetrennten Hülsenteils rastend verbunden werden.

22. Verfahren nach Anspruch 20 oder 21, bei dem zur Bildung der Siebhülse das Abschlusselement und/oder das Bodenelement von der Innenseite des abgetrennten Hülsenteils mit diesem verbunden werden.

23. Verfahren nach einem der Ansprüche 20 bis 22, bei dem das Bodenelement und/oder das vordere Abschlusselement (5) mithilfe von Federzungen mit dem abgetrennten Hülsenteil verbunden werden.

24. Verfahren nach einem der Ansprüche 20 bis 23, bei dem die Hülse mithilfe des Bodenelements (13) mit einem geschlossenen Boden versehen wird.

25. Verfahren nach einem der Ansprüche 20 bis 24, bei dem die Hülse im Bereich ihres vorderen Endes mit einem über ihre Außenkontur vorspringenden Außenflansch versehen wird.

## Claims

1. A perforated sleeve for an anchoring element, with
1.1 a substantially cylindrical sleeve (1), which
1.2 is open at both ends and
1.3 has a plurality of passage openings (4) arranged in rows in its covering surface,
1.4 a base element (13), which
1.5 is connectable or respectively connected as a separate component with the sleeve (1) in the region of its one end, and with
1.6 a front closure element (5) having a central opening (15), which closure element
1.7 is connectable or respectively connected with the sleeve (1) at its opposite end to the base element (13), wherein
1.8 the fastening or respectively connection between the base element (13) and/or the front closure element (5) on the one hand and the sleeve (1) on the other hand takes place by engaging into at least one passage opening (4) at a distance from the respective end of the sleeve (1) also enabling the engaging in the case of an oblique course of the end face of the sleeve.

2. The perforated sleeve according to Claim 1, in which the sleeve (1) is able to be produced by cutting to length a sleeve tube and/or a sleeve pipe which is constructed so as to be separable transversely to its longitudinal direction.

3. The perforated sleeve according to Claim 1 or 2, in which the base element (13) and/or the front closure element (5) is connectable in an arresting manner with the respective end of the sleeve (1).

4. The perforated sleeve according to one of the preceding claims, in which the base element (13) and/or the front closure element (5) of the inner side of the sleeve (1) are connectable therewith.

5. The perforated sleeve according to one of the preceding claims, in which for connection between the base element (13) and/or the front closure element (5) and the sleeve (1) flexible tongues (9) are provided, which are formed on the base element (13) and/or on the closure element (5).

6. The perforated sleeve according to one of the preceding claims, in which the base element (13), which is connected with the sleeve (1), forms a closed base (14) of the sleeve (1).

7. The perforated sleeve according to one of the preceding claims, in which the front closure element (5) has or respectively forms an outer flange (7) constructed at least partially projecting over the outer contour of the sleeve (1).

8. The perforated sleeve according to one of the preceding claims, in which the opening (15) of the closure element (5) is formed by lamellae (16) which keep the anchoring element at a distance from the inner side of the sleeve (1).

9. The perforated sleeve according to Claim 8, in which the lamellae (16) forming the inner opening (15) form a backflow flap for the hardening material which is introduced into the perforated sleeve.

10. The perforated sleeve according to one of the preceding claims, in which the passage openings (4) are arranged in rows which run transversely and parallel to the longitudinal axis of the sleeve (1).

11. The perforated sleeve according to one of the preceding claims, in which the sleeve (1) has cross-pieces (2) running in longitudinal direction and ring elements (3) connecting the cross-pieces (2).

12. The perforated sleeve according to Claim 10 or 11, in which the flexible tongues (9) engage into the passage openings (4) of the second row counted from the respective sleeve end.

13. The perforated sleeve according to one of the preceding claims, in which the sleeve consists of plastic.

14. A method for the production of a perforated sleeve for an anchoring element, in which
14.1 from a sleeve pipe and/or from a sleeve tube with a plurality of passage openings (4) arranged in rows in the covering surface, a portion is separated off corresponding to the desired length of the perforated sleeve,
14.2 a base element (13) is connected with the one end of the perforated sleeve which is thereby formed, and
14.3 a closure element (5) having an opening (15) is connected with the other end of the sleeve element, wherein
14.4 the base element and/or the front closure element are connected with the sleeve by engaging into at least one passage opening at a distance from the respective end of the sleeve also enabling the engaging in the case of an oblique course of the end face of the sleeve.

15. The method according to Claim 14, in which the closure element (5) and/or the base element (13) are connected in an arresting manner with the respective end of the perforated sleeve.

16. The method according to Claim 14 or 15, in which the closure element and/or the base element from the inner side of the perforated sleeve are connected therewith.

17. The method according to one of Claims 14 to 16, in which the base element and/or the front closure element (5) are connected with the sleeve with the aid of flexible tongues.

18. The method according to one of Claims 14 to 17, in which the sleeve (1) is provided with a closed base the aid of the base element (13).

19. The method according to one of Claims 14 to 18, in which the sleeve (1) is provided in the region of its front end with an outer flange projecting over its outer contour.

20. A method for anchoring an anchoring element in a borehole, in which
20.1 a portion of a sleeve pipe and/or sleeve tube, having a plurality of passage openings (4) arranged in rows in the covering surface, which corresponds to the desired insertion depth of the anchoring element into the borehole is separated off,
20.2 the one end of the separated sleeve portion is provided with a base element (13), covering this end, by engaging into at least one passage opening (4),
20.3 the opposite end is connected with a closure element (5) by engaging into at least one passage opening, wherein
20.4 the distance between the sleeve part on the one hand and the base element (13) and/or the closure element (5) on the other hand is selected so that the engaging is also possible in the case of an oblique course of the respective end face of the sleeve part,
20.5 the perforated sleeve which is thus formed is pushed into the borehole,
20.6 the interior of the perforated sleeve is filled with hardening material and
20.7 the anchoring element is pushed into the perforated sleeve.

21. The method according to Claim 20, in which for forming the perforate sleeve, the base element and/or the front closure element are connected in an arresting manner with the respective end of the separated sleeve part.

22. The method according to Claim 20 or 21, in which for the formation of the perforated sleeve, the closure element and/or the base element of the inner side of the separated-off sleeve part are connected therewith.

23. The method according to one of Claims 20 to 22, in which the base element and/or the front closure element (5) are connected with the separated sleeve part with the aid of flexible tongues.

24. The method according to one of Claims 20 to 23, in which the sleeve is provided with a closed base with the aid of the base element (13).

25. The method according to one of Claims 20 to 24, in which the sleeve is provided in the region of its front end with an outer flange projecting over its outer contour.

## Revendications

1. Manchon-tamis pour un élément d'ancrage, comprenant
1.1 un manchon (1) sensiblement cylindrique, qui
1.2 est ouvert sur les deux extrémités et
1.3 présente une pluralité d'ouvertures de passages (4) disposées dans des rangées sur sa surface d'enveloppe
1.4 un élément de fond (13) qui
1.5 peut être relié ou est relié comme composant séparé au manchon (1) dans la zone de l'une de ses extrémités, et
1.6 un élément de terminaison (5) avant, présentant une ouverture (15) centrale, qui
1.7 peut être relié ou est relié au manchon (1) sur son extrémité opposée à l'élément de fond (13),
1.8 la fixation ou la liaison entre l'élément de fond (13) et/ou l'élément de terminaison (5) avant d'une part et le manchon (1) d'autre part s'effectuant par engagement dans au moins une ouverture de passage (4) avec une distance à l'extrémité respective du manchon (1) qui permet l'engagement même avec un tracé oblique de la face avant du manchon.

2. Manchon-tamis selon la revendication 1, sur lequel le manchon (1) peut être fabriqué par la mise à la longueur d'un flexible de manchon et/ou d'un tuyau de manchon conçu de façon séparable transversalement à sa direction longitudinale.

3. Manchon-tamis selon la revendication 1 ou 2, sur lequel l'élément de fond (13) et/ou l'élément de terminaison (5) avant peu(ven)t être relié(s) par encliquetage à l'extrémité respective du manchon (1).

4. Manchon-tamis selon l'une des revendications précédentes, sur lequel l'élément de fond (13) et/ou l'élément de terminaison (5) avant peu(ven)t être relié(s) par le côté intérieur du manchon (1) à celui-ci.

5. Manchon-tamis selon l'une des revendications précédentes, sur lequel, pour la liaison entre l'élément de fond (13) et/ou l'élément de fermeture (5) avant et le manchon (1), il est prévu des lames à ressort (9), qui sont formées sur l'élément de fond (13) et/ou l'élément de fermeture (5).

6. Manchon-tamis selon l'une des revendications précédentes, sur lequel l'élément de fond (13) relié au manchon (1) forme un fond (14) fermé du manchon (1).

7. Manchon-tamis selon l'une des revendications précédentes, sur lequel l'élément de terminaison (5) avant présente ou forme une bride extérieure (7) formée au moins partiellement et dépassant du contour extérieur du manchon (1).

8. Manchon-tamis selon l'une des revendications précédentes, sur lequel l'ouverture (15) de l'élément de fermeture (5) est formée par des lamelles (16), qui maintiennent l'élément d'ancrage à distance du côté intérieur du manchon (1).

9. Manchon-tamis selon la revendication 8, sur lequel les lamelles (16) formant l'ouverture intérieure (15) forment un clapet de retenue pour le matériau durcissant et introduit dans le manchon-tamis.

10. Manchon-tamis selon l'une des revendications précédentes, sur lequel les ouvertures de passage (4) sont disposées en rangées qui sont agencées transversalement et parallèlement à l'axe longitudinal du manchon (1).

11. Manchon-tamis selon l'une des revendications précédentes, sur lequel le manchon (1) présente des montants (2) agencés dans le sens longitudinal et des éléments annulaires (3) reliant les montants (2).

12. Manchon-tamis selon la revendication 10 ou 11, sur lequel les lames à ressort (9) s'engagent dans les ouvertures de passage (4) de la seconde rangée à compter de l'extrémité de manchon respective.

13. Manchon-tamis selon l'une des revendications précédentes, sur lequel le manchon est en matière synthétique.

14. Procédé pour fabriquer un manchon-tamis pour un élément d'ancrage, dans lequel
14.1 une partie correspondant à la longueur souhaitée du manchon-tamis est séparée d'un tuyau de manchon et/ou d'un flexible de manchon comprenant une pluralité d'ouvertures de passage (4) disposées en rangées dans la surface d'enveloppe,
14.2 un élément de fond (13) est relié à l'une des extrémités du manchon-tamis ainsi formé, et 14.3 un élément de terminaison (5) présentant une ouverture (15) est relié à l'autre extrémité de l'élément de manchon,
14.4 l'élément de fond et/ou l'élément de terminaison avant étant relié(s) au manchon par engagement dans au moins une ouverture de passage avec une distance à l'extrémité respective du manchon qui permet l'engagement même avec un tracé oblique de la face avant du manchon.

15. Procédé selon la revendication 14, dans lequel l'élément de terminaison (5) et/ou l'élément de fond (13) est/sont relié(s) par encliquetage à l'extrémité respective du manchon-tamis.

16. Procédé selon la revendication 14 ou 15, dans lequel l'élément de terminaison et/ou l'élément de fond est/sont relié(s) à partir du côté intérieur du manchon-tamis à celui-ci.

17. Procédé selon l'une des revendications 14 à 16, dans lequel l'élément de fond et/ou l'élément de fermeture (5) avant est/sont relié(s) à l'aide de lames à ressort au manchon.

18. Procédé selon l'une des revendications 14 à 17, dans lequel le manchon (1) est doté d'un fond fermé à l'aide de l'élément de fond (13).

19. Procédé selon l'une des revendications 14 à 18, dans lequel le manchon (1) est doté dans la zone de son extrémité avant d'une bride extérieure faisant saillie sur son contour extérieur.

20. Procédé pour l'ancrage d'un élément d'ancrage dans un trou percé, dans lequel
20.1 une partie, correspondant à la profondeur d'insertion souhaitée de l'élément d'ancrage dans le trou percé, est enlevée sur un tuyau de manchon et/ou un flexible de manchon présentant une pluralité d'ouvertures de passage (4) disposées en rangées dans la surface d'enveloppe,
20.2 l'une des extrémités de la partie de manchon enlevée est dotée d'un élément de fond (13) recouvrant cette extrémité par engagement dans au moins une ouverture de passage (4), 20.3 l'extrémité opposée est reliée à un élément de terminaison (5) par engagement dans au moins une ouverture de passage,
20.4 la distance entre la partie de manchon d'une part et l'élément de fond (13) et/ou l'élément de terminaison (5) d'autre part étant choisie de telle sorte que l'engagement est possible même avec un tracé oblique de la face avant respective de la partie de manchon,
20.5 le manchon-tamis ainsi formé est introduit dans le trou percé,
20.6 l'intérieur du manchon-tamis est rempli avec du matériau durcissant et
20.7 l'élément d'ancrage est introduit dans le manchon-tamis.

21. Procédé selon la revendication 20, dans lequel, pour former le manchon-tamis, l'élément de fond et/ou l'élément de fermeture avant est/sont relié(s) par encliquetage à l'extrémité respective de la partie de manchon enlevée.

22. Procédé selon la revendication 20 ou 21, dans lequel, pour former le manchon-tamis, l'élément de terminaison et/ou l'élément de fond est/sont relié(s) à partir du côté intérieur de la partie de manchon enlevée à celle-ci.

23. Procédé selon l'une des revendications 20 à 22, dans lequel l'élément de fond et/ou l'élément de terminaison avant (5) est/sont relié(s) au moins à l'aide de lames à ressort à la partie de manchon enlevée.

24. Procédé selon l'une des revendications 20 à 23, dans lequel le manchon est doté d'un fond fermé à l'aide de l'élément de fond (13).

25. Procédé selon l'une des revendications 20 à 24, dans lequel le manchon est doté dans la zone de son extrémité avant d'une bride extérieure dépassant de son contour extérieur.
